# EUROPÄISCHE PATENTSCHRIFT

(11) **EP 0 606 891 B1**
(45) Veröffentlichungstag und Bekanntmachung des Hinweises auf die Patenterteilung: **29.12.1997**
(21) Anmeldenummer: 94100331.1
(22) Anmeldetag: 12.01.1994
(51) Int. Cl.: B02C 19/12, B02C 23/18, B09B 3/00

(54) **Verfahren zur Zerkleinerung von zu entsorgenden Geräten, die Hartschaum- oder Hartkunststoffe aufweisen**
Process for the comminution of discarded appliances comprising hard foam or hard plastic
Procédé pour la fragmentation d'appareils à éliminer contenant de la mousse rigide ou des matières plastiques rigides

(30) Priorität: 14.01.1993 DE 4300784
(43) Veröffentlichungstag der Anmeldung: 20.07.1994
(73) Patentinhaber: Pohl, Gert, 73434 Aalen (DE)
(72) Erfinder: Pohl, Gert, 73434 Aalen (DE)

(56) Entgegenhaltungen:
- DE-A- 3 811 486
- DE-A- 3 911 596
- DE-A- 3 933 811
- DE-C- 3 905 610
- DE-C- 3 941 742
- DE-C- 4 004 336

## Beschreibung

Die vorliegende Erfindung betrifft ein Verfahren zur Zerkleinerung von zu entsorgenden Geräten, die Hartschaum- oder Hartkunststoffe aufweisen, nach der im Oberbegriff des Anspruchs 1 näher definierten Art.

In der DE-A 39 33 811 sind ein Verfahren und eine Anlage zur Durchführung eines derartigen Verfahrens beschrieben.

Aus Umweltschutzgründen wird bei diesem vorbekannten Stand der Technik das entweichende Fluorkohlenwasserstoffgas, kurz FCKW genannt, aufgefangen, in einer Kondensierungseinrichtung verflüssigt und auf diese Weise umweltfreundlich zurückgewonnen. Das darin beschriebene Verfahren und die Anlage hierzu ist jedoch noch relativ aufwendig.

Aus der DE-A-39 11 596 ist eine Zerkleinerungseinrichtung mit einem senkrecht angeordneten Rotor bekannt. Der Innenraum, in welchem die Zerkleinerung erfolgt, ist durch eine Schleuse in der oben liegenden Zuführeinrichtung und eine Schleuse in der unten liegenden Entleerungseinrichtung gegen die Umwelt verschließbar. Eine Teilmenge der im Innenraum durch die Ventilatorwirkung des Rotors umgewälzten Luftmenge wird aus dem Innenraum abgesaugt, in pneumatischen Separiereinrichtungen von groben und feinen Schwebteilen befreit und anschließend zur FCKW-Entfernung einer Lösungsmittelrückgewinnungsanlage zugeführt.

Der vorliegenden Erfindung liegt die Aufgabe zugrunde, die erwähnten Verfahren weiter zu verbessern, insbesondere auf umweltfreundliche und rationelle Weise, eine Zerkleinerung des zu entsorgenden Gesamtproduktes für eine nachfolgende Trennung bzw. Sortierung zu erreichen, wobei bei Vorhandensein von Polyurethan oder anderen Kunststoffen auch eine saubere Rückgewinnung der dabei entstehenden Gase, insbesondere von Fluorkohlenwasserstoff, möglich sein soll.

Erfindungsgemäß wird diese Aufgabe durch die im kennzeichnenden Teil des Anspruchs 1 genannten Merkmale gelöst.

Durch das erfindungsgemäße Verfahren erfolgt auf rationelle Weise und sehr umweltschonend eine emissionsfreie Zerkleinerung des zu entsorgenden Gesamtgutes.

Neben einer Zerkleinerung von Hartschaumkunststoffen, wie insbesondere Polyurethanhartschaum, kann das erfindungsgemäße Verfahren auch zum Granulieren von Hartkunststoffabfällen, z.B. Joghurtbechern, Blumentöpfen, Computergehäusen, Polystyrol oder anderen Hartkunststofformteilen erfolgen, welche z.B. mit Metall im Verbund sind und nicht mit bekannten Zerkleinerungseinrichtungen zerkleinert werden können.

Versuche in der Praxis haben gezeigt, daß mit dem erfindungsgemäßen Verfahren durch die auftretenden unterschiedlichen Bruchcharakteristiken des Mahlgutes unterschiedliche Bruchstücke in den verschiedensten Größen entstehen, wodurch z.B. eine nachfolgende Sortierung durch Siebung und/oder Windsichtung möglich wird. So hat sich z.B. herausgestellt, daß Polyurethane auf Korngrößen von weniger als 0,2 mm vermahlen werden können, auch wenn sie durch Fremdstoffe, wie z.B. Metalle, Steine, Schmutz oder dergleichen verunreinigt sind, wobei dies in einem einzigen Arbeitsgang erfolgen kann.

Vorzugsweise erfolgt dabei die Vermahlung durch Schlagwerkzeuge und die Bewegung des Mahlgutes untereinander, wobei gleichzeitig auch eine Zentrifugalbewegung ausgenutzt wird.

Die Vermahlung selbst erfolgt in einem geschlossenen Raum, wobei z.B. durch einen erwärmten, gasförmigen Stickstoff eine Inertisierung des Innenraumes der Zerkleinerungseinrichtung erfolgt. Die Vermahlung selbst kann unter erhöhten Temperaturen, z.B. zwischen 50 bis 80 °C vorgenommen werden, wodurch eine bessere Ausgasung erreicht wird. Andererseits sind diese Temperaturen noch zu niedrig, als daß die Gefahr eines Auftretens von schädlichen Zersetzungprodukten besteht.

In vorteilhafter Weise wird man eine Vermahlung der Polyurethanbestandteile auf weniger als 2 mm, noch mehr bevorzugt auf Korngrößen von kleiner als 0,5 mm vornehmen. Beste Werte haben sich bei einer Korngröße von unter 0,2 mm ergeben.

Grundsätzlich ist eine Vermahlung der Kunststoffe auf eine Größe, die kleiner oder gleich der Zellgröße der Kunststoffstruktur entspricht, am vorteilhaftesten, denn dabei läßt sich eine Ausgasung, z.B. bei Polyurethan, am besten durchführen.

Bei einer derartigen Vermahlung läßt sich auch hinterher eine einfache und rationelle Trennung des Polyurethangranulates von den übrigen Mahlgut, z.B. durch einen Windsichter, vornehmen.

Nachfolgend ist ein Ausführungsbeispiel anhand der Zeichnung prinzipmäßig beschrieben.

Es zeigt:
- Fig. 1: eine Seitenansicht einer Zerkleinerungseinrichtung zur Durchführung des erfindungsgemäßen Verfahrens, teilweise im Schnitt;

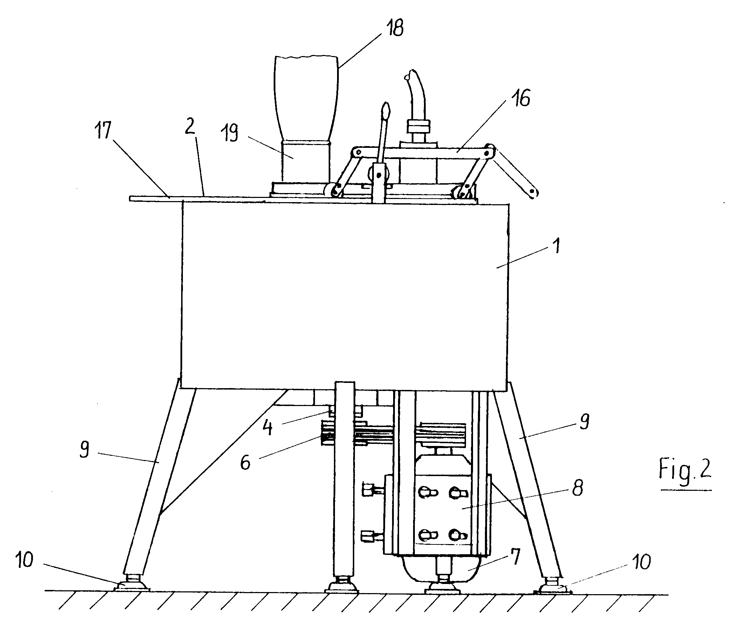

- Fig. 2: eine weitere Seitenansicht der Zerkleinerungseinrichtung nach der Fig. 1 aus anderer Richtung.

Die Zerkleinerungseinrichtung ist nach Art einer Mühle als doppelwandiger Behälter 1 aufgebaut, der durch einen Deckel 2 druckdicht verschlossen werden kann. Zur Schallisolierung kann der Behälter 1 mit einer Schallisolierungsauflage 3 versehen sein. Der Behälter 1 besitzt eine zylinderförmige Gestalt mit einer vertikalen Längsachse, wobei der Deckel 2 sich auf der Oberseite befindet.

Von der Unterseite her ist eine Antriebswelle 4 in den Behälter eingeführt, wobei an dessen Ende ein Aufnahmekopf 5 in Form einer Nabe koaxial zur Längsachse des Behälters 1 angeordnet ist.

Die Antriebswelle 4 ist über einen Keilriemenantrieb 6 mit einem Antriebsmotor 7 verbunden, der an einer Motoraufhängung 8 befestigt ist.

Der Behälter 1 ist mit Standbeinen 9 versehen, wobei zur Vibrationsdämpfung Schwingmetalle 10 zwischen den Standbeinen 9 und dem Boden vorgesehen sind.

Der Behälter 1 ist weiterhin mit einem Anschlußstutzen 11 zur Einführung von gasförmigem Stickstoff, einem Torrmeter 12 mit einem Sicherheitsventil zur Behälterdrucküberwachung, mit einer Absaugleitung 13 zur Evakuierung des Inertgases und mit einem Austragsschacht 14 versehen. Über eine hermetisch verriegelbare Beschickungsöffnung 15 erfolgt die Beschickung des Behälters mit den zu zerkleinerten Geräten, z.B. einem Kühlschrank.

Über eine Andruckeinrichtung 16 mit einem Hebelgestänge läßt sich der Deckel 2 druckdicht verschließen. Über das Gestänge der Andruckvorrichtung 16 läßt sich der Deckel im Bedarfsfalle auch wieder öffnen, wozu zur Erleichterung auch eine Deckelführung 17 vorgesehen sein kann.

An dem Aufnahmekopf 5 sind als Schlagwerkzeuge wenigstens zwei sich gegenüberliegende Ketten jeweils mit ihrem inneren Ende befestigt.

An dem Deckel ist ein Anschlußstutzen 19 angeordnet, an dem eine Membrane 18 mit ihren vorderen offenen Enden befestigt ist. Die Membrane 19 ist an ihrem hinteren Ende mit einem Seil 20 oder dergleichen verbunden.

Über Umlenkrollen 21 ist das Seil zu einem Gegengewicht 22 geführt, womit die Membrane 18 gespannt ist.

Die dargestellte Zerkleinerungseinrichtung funktioniert auf folgende Weise:

Zur Zerkleinerung und zum Zurückgewinnen von Fluorkohlenwasserstoff und für ein nachfolgendes sortiertes Trennen der Bestandteile des zu zerkleinernden Gutes wird dieses in den Behälter 1 von oben her eingebracht. Anschließend wird über den Anschlußstutzen 11 gasförmiger Stickstoff zur Inertisierung des Behälterinneren eingeblasen. Nach dieser Inertisierung wird der Motor 7 aktiviert und durch die Ketten 17 wird in Verbindung mit der zentrifugischen Bewegung das eingebrachte Mahlgut zerkleinert. Aufgrund der Wirkung der elastischen Ketten und einer Eigenbewegung und Reibung des Mahlgutes untereinander, erfolgt eine sehr weitgehende Zerkleinerung. Insbesondere wird eine Vermahlung von Polyurethan-Bestandteilen auf eine Korngröße von unter 0,2 mm erreicht. Die Zerkleinerung des Mahlgutes erfolgt vorzugsweise bei Temperaturen zwischen 50 und 80°C, wodurch eine bessere Ausgasung erreicht wird.

Nach Beendigung des Mahlvorganges bleibt die Mühle bzw. der Behälter noch geschlossen. Über die Absaugleitung 13 wird die Inertluft mit den freigewordenen Gasen aus der Mühle abgesaugt und zu einer nicht dargestellten Kondensationseinrichtung weitergeleitet, um eine Trennung und Sammlung der gasförmigen Bestandteile zu erreichen.

Um einen zu hohen Unterdruck sowie eine Verdünnung der Abluft durch Spülgas bzw. nachströmende Luft auszuschließen, wird über den im Deckel 2 angebrachten Anschlußstutzen 19, an dem die Membrane 18 befestigt ist, die Membrane 18 in das Innere des Behälters 1 eingesaugt. Die Membrane 18 ist derart ausgestaltet bzw. derart elastisch, daß sie sich Praktisch nahezu vollständig an die Innenwände des Behälters 1 anlegt und damit den Platz der abzusaugenden Inertluft einnimmt.

Wenn das Behälterinnere auf diese Weise evakuiert ist, schaltet ein nicht dargestelltes Pumpenaggregat die Absaugung ab und das zerkleinerte Mahlgut kann über den Austragsschacht 3 nach Öffnung eines entsprechenden Absperrdeckels ausgetragen werden. Eine nicht dargestellte Prallwand kann dabei für ein geordnetes Austragen sorgen. In einer nicht dargestellten nachgeschalteten Sortiereinrichtung erfolgt dann die Sortierung des zerkleinerten Mahlgutes durch Siebung und Windsichtung. Durch die unterschiedliche Bruchcharakteristik des Mahlgutes, zerkleinern sich die einzelnen Materialien zu jeweils unterschiedlichen Korngrößen. So ist eine Sortierung durch Siebung und Windsichtung möglich. Während des Austragvorganges bleibt die Mühle noch geschlossen. Lediglich der Absperrdeckel vor dem Austragsschacht ist geöffnet. Anschließend wird der Motor 7 der Zerkleinerungseinrichtung nochmals eingeschaltet, wobei durch die Anordnung des Austragsschachtes 14 im unteren Bereich der Umfangswand in Folge der Zentrifugalkraft durch die Ketten 17 das zerkleinerte Material ausgetragen wird. Nach Sortieren des Rein-PUR-Pulvers aus dem Gemisch, kann dieses nochmals in einer geschlossenen Kammer auf ca. 140 bis 170 °C erhitzt werden (Verweildauer ca. 1 bis 10 min.) und die dabei freiwerdenden Rest-FCKW-Gase aus der Matrix (ca. 1,5 Gew.%) abgesaugt und dem Kondensator zugeführt werden.

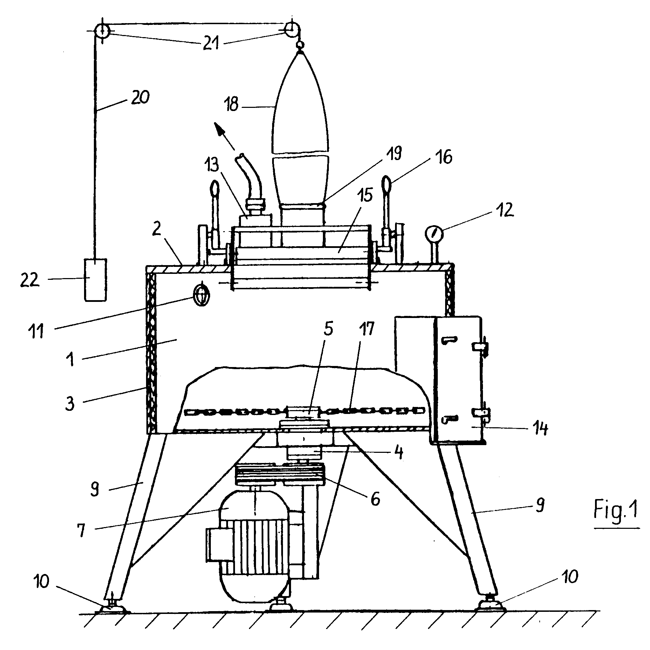

Nach einem Austrag des Mahlgutes kann das Innere des Behälters belüftet werden, wobei die Membrane 18 durch das Gegengewicht 22 wieder aus dem Inneren des Behälters 1 herausgezogen wird und in die in der Fig. 1 dargestellte Position zurückgebracht wird.

Mit der dargestellten Zerkleinerungseinrichtung können die verschiedenartigsten Stoffe verarbeitet werden. Grundsätzlich ist sprödes Material selbstverständlich am besten geeignet, wobei sich herausgestellt hat, das Verunreinigungen metallischer Art nicht besonders hinderlich sind. Derartige metallische Verunreinigungen werden im allgemeinen in größerer Form ausgeschieden, so daß sie leicht aussortiert werden können.

Neben einer Verwendungsmöglichkeit zur Entsorgung von Kühlgeräten, kann die Zerkleinerungsvorrichtung auch zur Entsorgung von anderen Teilen dienen, die Polyurethan aufweisen. Ein zunehmend wichtig werdendes Einsatzgebiet ist hierbei das Recyceln von Kfz-Teilen, wie z.B. polyurethan-geschäumte Hohlkörper mit Hartkunststoffhüllen, wie z.B. Armaturenbretter. Derartige Teile können ohne Vorbehandlung der darin enthaltenen metallischen Teilen verarbeitet werden, wobei gleichzeitig die Fluorkohlenwasserstoffe zurückgewonnen werden können.

Wenn statt Polyurethan andere Hartschäume oder Hartkunststoffe zu entsorgen sind, kann - je nach Art der zu entsorgenden Kunststoffe - eine nachgeschaltete Kondensierungseinrichtung für die dabei entstehenden Gase entfallen. Eine Inertisierung des Inneren der Mühle wird man jedoch im allgemeinen vornehmen, um Staubexplosionen vorzubeugen. Selbstverständlich können jedoch auch im Bedarfsfalle andere bei der Vermahlung entstehende gasförmigen Bestandteile zurückgewonnen oder entsorgt werden, wenn diese zusammen mit dem Inertgas aus dem Inneren der Mühle abgesaugt werden.

## Patentansprüche

1. Verfahren zur Zerkleinerung von zu entsorgenden Geräten, die Hartschaum- oder Hartkunststoffe aufweisen, insbesondere zur emissionsfreien Rückgewinnung von Fluorkohlenwasserstoff aus Polyurethanschaumisolierungen und anderen Bestandteilen, insbesondere von Kühlgeräten und Kühlschränken, wobei der Hartschaum- oder die Hartkunststoffe zusammen mit den übrigen Geräteteilen in eine Zerkleinerungseinrichtung eingebracht und in dieser zerkleinert werden, wobei die Zerkleinerung in einem gegenüber der Umgebung abgeschlossenen Raum erfolgt, und die Zerkleinerungseinrichtung nach dem Mühlensystem arbeitet, wobei die Zerkleinerung und das Vermahlen unter anderem durch Bewegung des Mahlgutes untereinander erfolgt,
**dadurch gekennzeichnet,** daß
der Innenraum der Zerkleinerungseinrichtung nach dem Befüllen mit dem zu zermahlenden Gut inertisiert wird und nach dem Vermahlen des Gutes Inertgas zusammen mit den bei der Vermahlung entstehenden Gasen evakuiert wird.

2. Verfahren nach Anspruch 1,
**dadurch gekennzeichnet,** daß
als Inertgas gasförmiger Stickstoff eingeblasen wird.

3. Verfahren nach Anspruch 1 oder 2,
**dadurch gekennzeichnet,** daß
die Vermahlung von Polyurethanbestandteilen bei erhöhten Temperaturen auf eine Korngröße von weniger als 2 mm erfolgt.

4. Verfahren nach Anspruch 3,
**dadurch gekennzeichnet,** daß
die Vermahlung der Polyurethanbestandteile auf eine Korngröße von weniger als 0,5 mm erfolgt.

5. Verfahren nach Anspruch 1,
**dadurch gekennzeichnet,** daß
die Vermahlung in einem Temperaturbereich von ca. 50 bis 80 °C stattfindet.

## Claims

1. Procedures for grinding discarded equipment that contain polyurethane foams or rigid plastics, in particular for emission-free reclamation of fluorocarbon hydrogen contained in polyurethane foam insulation and other components. In particular refrigeration units and refrigerators, where the polyurethane foam or rigid plastic is placed together with the remaining equipment components, in a grinder (or mill) and reduced in size. This reduction occurs in a room isolated from the environment, located after the grinder (or mill). The principal size reduction of the material to be ground is caused by internal movements of the material particles against each other. After being filled with the material to be ground the grinder interior is inert. After the material has been milled the inert gas, together with the gases occurring during the milling, are removed.

2. **Procedure according to claim 1,**
identified through, forced introduction of the inert gas as nitrogen gas.

3. **Procedure according to claim 1 or 2,**
identified through, that the grinding of components containing polyurethane at elevated temperatures produce particle sizes smaller than 2 mm.

4. **Procedure according to claim 3,**
identified through, that the grinding of components containing polyurethane produce particle sizes smaller than 0,5 mm.

5. **Procedure according to claim 1,**
identified through, that the grinding occurs within a temperature range from approximately 50 to 80°C.

## Revendications

1. Procédé permettant de concasser des appareils destinés au recyclage contenant des mousses ou des plastiques durs, notamment pour récupérer les hydrocarbures fluorés, sans émission, provenant d'isolations thermiques à la mousse alvéolaire de polyuréthanne et autres composants, et notamment (de concasser) des réfrigérateurs et appareils frigorifiques, la mousse ou les plastiques durs étant amenés avec les autres constituants de ces appareils dans un concasseur pour y être concassés dans une chambre fermée, sans contact avec l'environnement, le concasseur travaillant selon le principe du moulin et le concassage et le broyage se faisant, entre autres, par agitation de la matière à broyer,
caractérisé par le fait que l'intérieur du concasseur est rendu inerte après le remplissage de la matière à broyer et que le gaz inerte ainsi que les gaz dégagés au moment du broyage sont évacués après le broyage.

2. Procédé d'après la revendication 1, caractérisé par le fait qu'on insuffle de l'azote gazeux comme gaz inerte.

3. Procédé d'après la revendication numéro 1 ou 2, caractérisé par le fait que le broyage des constituants en polyuréthanne est réalisé à hautes températures et permet d'obtenir une granulation inférieure à 2 mm.

4. Procédé d'après la revendication numéro 3, caractérisé par le fait que le broyage des constituants en polyuréthanne permet d'obtenir une granulation inférieure à 0,5 mm.

5. Procédé d'après la revendication numéro 1, caractérisé par le fait que le broyage est réalisé à une température comprise entre 50 et 80 °C.
